# EUROPÄISCHE PATENTSCHRIFT

(11) **EP 4 505 061 B1**
(45) Veröffentlichungstag und Bekanntmachung des Hinweises auf die Patenterteilung: **23.07.2025**
(21) Anmeldenummer: 23705365.7
(22) Anmeldetag: 14.02.2023
(51) Int. Cl.: F03B 1/04, F03B 15/20

(54) **PELTON TURBINE UND BETRIEBSVERFAHREN**
PELTON TURBINE AND OPERATING METHOD
TURBINE PELTON ET PROCÉDÉ DE FONCTIONNEMENT

(30) Priorität: 04.04.2022 DE 102022107939
(43) Veröffentlichungstag der Anmeldung: 12.02.2025
(73) Patentinhaber: Voith Patent GmbH, 89522 Heidenheim (DE)
(72) Erfinder: NECKER, Jörg, 89522 Heidenheim (DE); MACK, Reiner, 89547 Dettingen (DE)
(74) Vertreter: Voith Patent GmbH - Patentabteilung
(86) Internationale Anmeldenummer: PCT/EP2023/053592
(87) Internationale Veröffentlichungsnummer: WO 2023/193982

(56) Entgegenhaltungen:
- WO-A1-2020/057792
- CH-A5- 601 663
- CN-A- 111 852 721
- CN-U- 204 283 709
- SU-A1- 450 900

## Beschreibung

Die Erfindung betrifft eine Pelton Turbine und Verfahren zum Betrieb einer Pelton Turbine.

Pelton Turbinen sind aus dem Stand der Technik bekannt. So offenbart beispielsweise die DE 10 2010 024 475 A1 eine Pelton Turbine umfassend ein Laufrad mit einer Anzahl von Bechern und zwei oder mehrere Düsen zum Aufbringen eines Wasserstrahles auf die Becher. Daneben sind auch Pelton Turbinen mit nur einer Düse bekannt geworden.

Die WO 2020/057792 A1 offenbart ebenfalls eine gattungsgemäße Pelton Turbine.

Bei einer Pelton Turbine sollte das Wasser durch die Düsen dem Laufrad möglichst gleichmäßig zugeführt werden. Sowohl die Durchflussmenge in den einzelnen Düsen als auch die Verteilung des Wasserflusses in Umfangsrichtung in jeder Düse sollte möglichst ausgeglichen sein. Aus dem Stand der Technik sind keine Mittel bekannt, die es ermöglichen den IST-Zustand der genannten Größen zu erfassen, anzuzeigen und ggf. zu korrigieren.

Die Aufgabe der Erfindung ist es, geeignete Mittel zur Erfassung der Wasserverteilung während dem Betrieb der Pelton Turbine und Verfahren zur Verwendung dieser Mittel zu offenbaren.

Die Aufgabe wird erfindungsgemäß durch eine Ausführung und Verfahren entsprechend den unabhängigen Ansprüchen gelöst. Weitere vorteilhafte Ausführungsformen der vorliegenden Erfindung finden sich in den Unteransprüchen.

Im Folgenden wird die Erfindung anhand von Figuren erläutert. Die Figuren zeigen im Einzelnen:
- Fig.1: Pelton Turbine gemäß dem Stand der Technik;
- Fig.2: Düse gemäß dem Stand der Technik;
- Fig.3: Erfindungsgemäße Düse in unterschiedlichen Ansichten;
- Fig.4: Erfindungsgemäße Pelton Turbine.

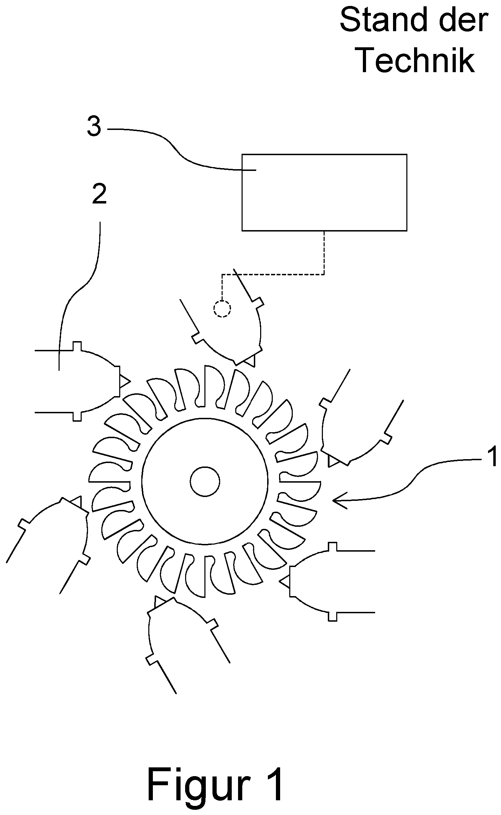

Figur 1 zeigt eine Pelton Turbine gemäß dem Stand der Technik in schematischer Darstellung. Die Pelton Turbine umfasst ein Laufrad, welches mit 1 bezeichnet ist und welches eine Vielzahl von Bechern umfasst. Ferner umfasst die Pelton Turbine wenigstens eine Düse, von denen eine mit 2 bezeichnet ist. Die in Figur 1 gezeigte Anordnung umfasst sechs Düsen. Die Düsen 2 sind so angeordnet, dass die aus den Düsen 2 austretenden Wasserstrahlen auf die Becher des Laufrades 1 treffen und so das Laufrad 1 antreiben können. Die Düsen 2 sind regelbar ausgeführt, d.h. sie umfassen eine sogenannte Nadel, welche vor und zurückbewegt werden kann. Dadurch ist der Wasserfluss durch die betreffende Düse einstellbar. In Figur 1 sind die Nadeln durch die Spitzen am Ende der Düsen 2 angedeutet. Die Pelton Turbine umfasst ferner eine Steuereinrichtung, welche mit 3 bezeichnet und so ausgeführt ist, dass sie die Nadelstellung der Düsen steuern kann.

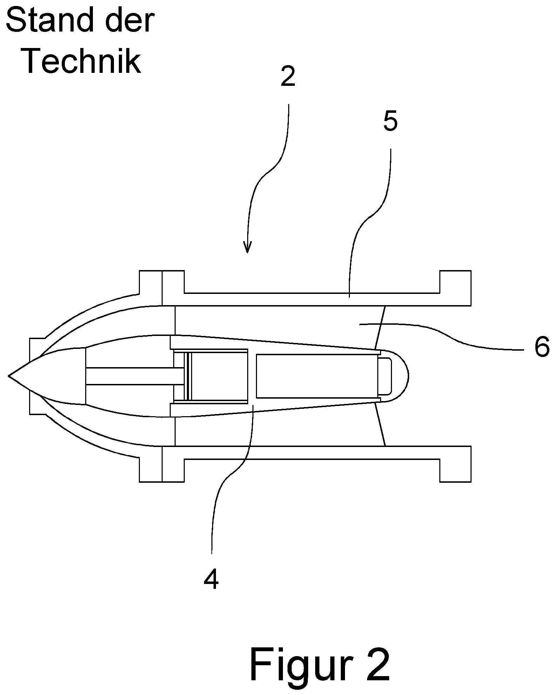

Figur 2 zeigt in schematischer Darstellung eine Düse 2 gemäß dem Stand der Technik. Die Düse umfasst ein Hauptgehäuse, welches mit 5 bezeichnet ist, ein Servomotor-Gehäuse, welches im Inneren des Hauptgehäuses 5 angeordnet und mit 4 bezeichnet ist, und wenigstens eine Stütze, welche das Servomotor-Gehäuse 4 mit dem Hauptgehäuse 5 verbindet. Figur 2 zeigt zwei Stützen, von denen eine mit 6 bezeichnet ist. Wenn mehr als eine Stütze 6 vorhanden ist, dann wird der Wasserkanal zwischen Hauptgehäuse 5 und Servomotor-Gehäuse 4 in Teilkanäle unterteilt. Dabei entspricht die Anzahl der Teilkanäle der Anzahl der Stützen 6.

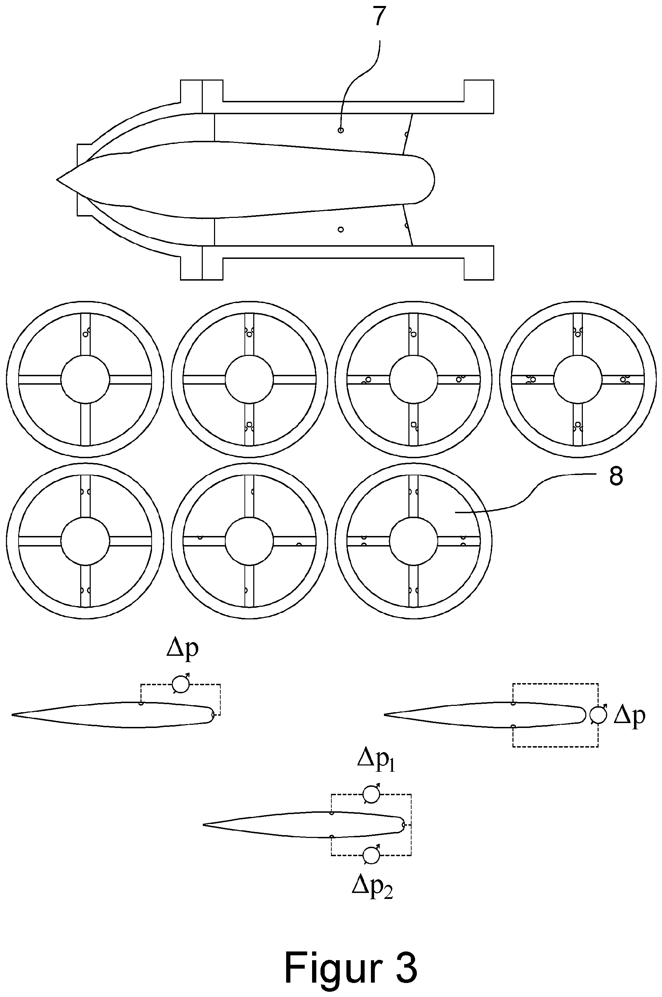

Figur 3 zeigt in schematischer Darstellung eine Düse 2 gemäß der vorliegenden Erfindung in verschiedenen Ansichten und Ausführungsformen. Die erfindungsgemäße Düse umfasst wenigstens zwei Drucksensoren. In den Teilfiguren der Figur 3 sind die Drucksensoren durch kleine Kreise angedeutet, von denen einer mit 7 bezeichnet ist. Dabei sind die Drucksensoren 7 so an der bzw. den Stützen 6 angeordnet, dass die Differenz der mit einem Sensorpaar erfassten Wasserdrücke entweder ein Maß für die Durchflussmenge durch die Düse oder ein Maß für die Homogenität der Wasserverteilung in der Düse ist. Dabei ist das Maß für die Homogenität der Wasserverteilung in einer Düse ein Maß für die Strahlqualität dieser Düse. Dies wird im Folgenden noch näher erläutert.

Im oberen Teil der Figur 3 ist eine erfindungsgemäße Düse im Längsschnitt dargestellt. An jeder der sichtbaren Stützen sind zwei Drucksensoren 7 angeordnet. Dabei kann man grundsätzlich zwei Bereiche unterscheiden, an denen Drucksensoren 7 angeordnet sein können. Ein erster Bereich ist die Stirnkante einer Stütze, d.h. die der Wasserflussrichtung entgegengesetzte Kante der betreffenden Stütze. Ein zweiter Bereich ist die Flanke der Stütze.

Besonders gut können die beiden Bereiche im unteren Teil der Figur 3 unterschieden werden, da dort jeweils eine Stütze im Querschnitt zu sehen ist. Im Querschnitt links umfasst die dargestellte Stütze zwei Sensoren 7, wobei ein erster Sensor 7 mittig an der Stirnkante und ein zweiter Sensor 7 an einer Flanke der Stütze angeordnet ist. Dabei ist der zweite Sensor 7 genau an der Stelle der Flanke angeordnet, an der die Stütze die größte Dicke aufweist. Wenn während des Betriebes der Düse Wasser an der Stütze vorbeifließt, ergibt sich aufgrund des Bernoulli-Effekts ein Druckunterschied zwischen den genannten Stellen, an denen die Drucksensoren 7 angeordnet sind, da die Strömungsgeschwindigkeiten an diesen Stellen unterschiedlich groß sind. Dabei ist der gemessene Druckunterschied Δp ein Maß für die Durchflussmenge durch die Düse, d.h. je größer der gemessene Druckunterschied desto höher die aktuell vorliegende Durchflussmenge durch die Düse. Dabei ist die Lage der Sensoren so gewählt, dass der gemessene Druckunterschied Δp bei gegebener Durchflussmenge maximal wird, d.h. die beschriebene Lage der Sensoren ist optimal in Bezug auf das Signalrauschverhältnis der Druckunterschiedsmessung. Ein Abweichen von dieser optimalen Anordnung führt also nur zu einer Abnahme der Signalgüte, wobei die gemessene Druckdifferenz immer noch ein Maß für die Durchflussmenge darstellt. Entscheidend dafür, dass der gemessene Druckunterschied ein Maß für die Durchflussmenge darstellt, ist nur, dass sich die Sensoren an Stellen befinden, an denen sich bei gegebener Durchflussmenge unterschiedlich große Strömungsgeschwindigkeiten einstellen.

Soll die gemessene Druckdifferenz ein Maß für die Homogenität der Wasserverteilung in der Düse darstellen, dann ist es von Vorteil, wenn die Drucksensoren 7 anders angeordnet werden. Die Homogenität der Wasserverteilung in der Düse ist dann gestört, wenn auf der einen Seite einer Stütze mehr Wasser verbeiströmt als auf der anderen Seite derselben Stütze. Zur Detektion einer solchen Abweichung von der Homogenität muss ein erster Drucksensor 7 auf der einen Seite der betreffenden Stütze und ein zweiter Drucksensor 7 auf der anderen Seite derselben Stütze angeordnet werden. Besonders sensitiv ist die Anordnung, wenn sich die Drucksensoren 7 an Stellen befinden, an denen sich bei gegebener Durchflussmenge gleich große Strömungsgeschwindigkeiten einstellen. Dabei bezieht sich die letztgenannte Bedingung auf ideale Strömungsverhältnisse, d.h. auf eine homogene Wasserverteilung. Weichen die tatsächlichen Strömungsverhältnisse von den intendierten idealen Strömungsverhältnissen ab, so ist die gemessene Druckdifferenz nicht Null, sondern von Null verschieden und die Größe der Abweichung von Null ist ein Maß für die Homogenität der tatsächlich vorliegenden Wasserverteilung in der Düse. Im Querschnitt rechts unten der Figur 3 ist eine solche besonders sensitive Sensoranordnung dargestellt. Die Drucksensoren 7 sind genau gegenübereinander auf den beiden Seiten der Stütze angeordnet.

Auch hier ist die Sensoranordnung tolerant für Abweichung von der optimalen Anordnung. Die Sensoren könnten auch an Stellen angeordnet sein, an denen auch bei idealen Strömungsverhältnissen unterschiedliche Strömungsgeschwindigkeiten vorliegen und damit unterschiedliche Drucke anliegen. Es ergäbe sich dann auch bei idealen Strömungsverhältnis ein Druckunterschied ungleich Null. Eine Inhomogenität könnte dann dadurch detektiert werden, dass die gemessene Druckdifferenz von der zu erwartenden Druckdifferenz (bei idealen Strömungsverhältnissen) abweicht. Dazu muss aber die aktuelle Durchflussmenge durch die betreffende Düse bekannt sein.

Der ganz unten mittig dargestellte Querschnitt der Figur 3 zeigt eine Sensoranordnung, welche eine Kombination der beiden darüber dargestellten Sensoranordnungen bildet. Mit einer solchen Anordnung können Druckdifferenzen gemessen werden, die sowohl ein Maß für die Durchflussmenge als auch ein Maß für die Homogenität darstellen. Es können beispielsweise wie in der Figur 3 dargestellten Druckdifferenzen Δp₁ und Δp₂, welche beide ein Maß für die Durchflussmenge darstellen. Die Druckdifferenz (Δp₁-Δp₂) stellte dann ein Maß für die Homogenität dar, wobei sich in der angegebenen Formel der vom stirnseitige angeordneten Drucksensor gemessen Wert heraushebt.

Im mittleren Teil der Figur 3 sind insgesamt 7 Ansichten auf eine Düse in Wasserflussrichtung zusehen. D.h. man blickt jeweils von hinten auf die Stirnseiten der Stützen. Diese Ansichten zeigen verschiedene vorteilhafte Anordnungen von Sensoren in Bezug auf die Verteilung der Sensoren auf die zur Düse gehörenden Stützen. Die dargestellte Düse umfasst dabei jeweils vier Stützen, welche kreuzförmig angeordnet sind. Dadurch ergeben sich jeweils vier Teilkanäle, von denen einer mit 8 bezeichnet ist.

Im Folgenden werden die einzelnen Ansichten beschrieben. Die Beschreibung erfolgt in jeder Reihe von links nach rechts.

Obere Reihe 1. Ansicht: Die Düse umfasst zwei Sensoren, welche so angeordnet sind, dass die Druckdifferenz ein Maß für die Durchflussmenge durch die Düse darstellt. Dabei sind die beiden Sensoren auf ein und derselben Stütze angeordnet, wobei einer an der Stirnseite und einer an der Flanke angeordnet ist. Im Prinzip könnten die beiden Sensoren genauso gut auch an zwei verschiedenen Stützen angeordnet sein, d.h. ein Sensor an einer ersten Stütze und der andere an einer zweiten Stütze. Genaugenommen ist die mit dieser Anordnung gemessene Druckdifferenz zunächst ein Maß für die Durchflussmenge durch denjenigen Teilkanal, in dem der flankenseitige Drucksensor angeordnet ist. Da die Durchflussmenge durch die Düse jedoch mit der Durchflussmenge eines jeden Teilkanals skaliert, stellt die gemessene Druckdifferenz auch ein Maß für die Durchflussmenge durch die Düse dar.

Obere Reihe 2. Ansicht: Die Düse umfasst sechs Sensoren, von denen je drei an gegenüberliegenden Stützen angeordnet sind. Dadurch ist in jedem Teilkanal 8 ein flankenseitiger Drucksensor angeordnet, so dass für jeden Teilkanal Druckdifferenzen gebildet werden können, die ein Maß für die Durchflussmenge durch den betreffenden Teilkanal darstellen. Jede dieser Druckdifferenzen stellt auch ein Maß für den Durchfluss durch die Düse dar. Außerdem ergibt sich aus den Abweichungen der genannten Druckdifferenzen voneinander ein Maß für die Homogenität der Wasserverteilung in der Düse.

Obere Reihe 3. Ansicht: Die Düse umfasst acht Sensoren, von denen je zwei an jeder Stütze angeordnet sind, und zwar so, dass in jedem Teilkanal 8 ein flankenseitiger Drucksensor angeordnet ist. So kann für jeden Teilkanal eine Druckdifferenz gebildet werden, die ein Maß für die Durchflussmenge durch den betreffenden Teilkanal darstellt. Jede dieser Druckdifferenzen stellt auch ein Maß für den Durchfluss durch die Düse dar. Außerdem ergibt sich aus den Abweichungen der genannten Druckdifferenzen voneinander ein Maß für die Homogenität der Wasserverteilung in der Düse.

Obere Reihe 4. Ansicht: Die Düse umfasst zwölf Sensoren, von denen je drei an jeder Stütze angeordnet sind, und zwar so, dass in jedem Teilkanal 8 zwei flankenseitige Drucksensor angeordnet ist. So können für jeden Teilkanal zwei Druckdifferenz gebildet werden, die ein Maß für die Durchflussmenge durch den betreffenden Teilkanal darstellen. Jede dieser Druckdifferenzen stellt auch ein Maß für den Durchfluss durch die Düse dar. Außerdem ergibt sich aus den Abweichungen der genannten Druckdifferenzen voneinander ein Maß für die Homogenität der Wasserverteilung in der Düse. Da in jedem Teilkanal zwei flankenseitige Drucksensoren angeordnet sind, kann man aus den betreffenden Druckdifferenzen sogar ein Maß für die Homogenität der Wasserverteilung in ein und demselben Teilkanal gewinnen.

Die untere Reihe der Ansichten zeigt Ausführungsformen, bei denen allein ein Maß für die Homogenität der Wasserverteilung in der Düse gewonnen werden kann, da die Anordnungen nur flankenseitige Drucksensoren umfassen. Wenn auch ein Maß für die Durchflussmenge gewonnen werden soll, dann kann das dadurch erreicht werden, dass ein oder mehrere stirnseitige Drucksensoren hinzugefügt und entsprechende Druckdifferenzen gebildet werden.

Untere Reihe 1. Ansicht: Die Düse umfasst vier flankenseitige Sensoren, von denen je zwei an gegenüberliegenden Stützen angeordnet sind, so dass in jedem Teilkanal 8 ein flankenseitiger Drucksensor angeordnet ist. Es können insgesamt 6 verschiedene Druckdifferenzen gebildet werden, welche jeweils ein Maß für die Homogenität der Wasserverteilung in der Düse sind.

Untere Reihe 2. Ansicht: Die Düse umfasst vier flankenseitige Sensoren, von denen je einer an einer der Stützen angeordnet ist, so dass in jedem Teilkanal 8 ein flankenseitiger Drucksensor angeordnet ist. Es können insgesamt sechs verschiedene Druckdifferenzen gebildet werden, welche jeweils ein Maß für die Homogenität der Wasserverteilung in der Düse sind.

Untere Reihe 3. Ansicht: Die Düse umfasst acht flankenseitige Sensoren, von denen je zwei an jeder Stütze angeordnet sind, so dass in jedem Teilkanal 8 zwei flankenseitige Drucksensor angeordnet sind. Es können insgesamt 28 verschiedene Druckdifferenzen gebildet werden, welche jeweils ein Maß für die Homogenität der Wasserverteilung in der Düse sind. Darunter befinden sich auch Druckdifferenzen, die ein Maß für die Homogenität der Wasserverteilung in ein und demselben Teilkanal darstellen.

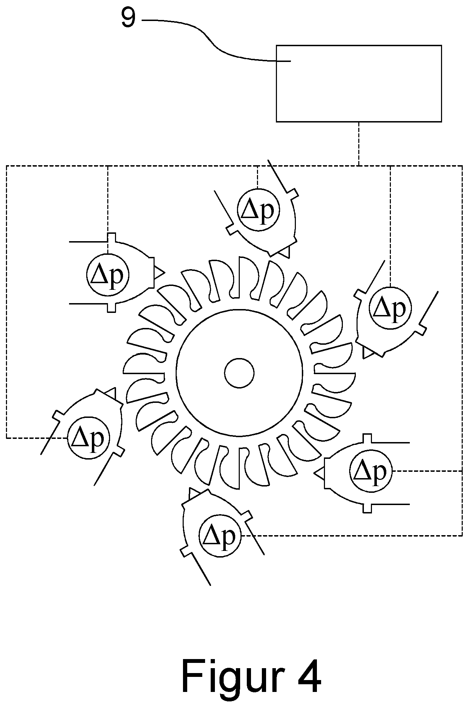

Figur 4 zeigt eine erfindungsgemäße Pelton Turbine. Jede der Düsen umfasst wenigstens zwei Drucksensoren, welche wie oben beschrieben angeordnet sind, so dass die Differenz der mit diesen Sensoren gemessenen Drucke ein Maß für die Durchflussmenge durch die betreffende Düse oder ein Maß für die Homogenität der Wasserverteilung der betreffenden Düse darstellt. Die erfindungsgemäße Pelton Turbine umfasst ferner eine Einrichtung zur Erfassung der mit dem Drucksensoren gemessenen Drucke und zur Bildung von Druckdifferenzen. Die Einrichtung ist mit 9 bezeichnet. Dabei kann es sich um eine separate Einrichtung oder um eine Einrichtung handeln, welche in die Steuereinrichtung 3 zur Steuerung der Nadeleinstellung der Düsen integriert ist. Die Einrichtung 9 könnte auch dezentral ausgebildet sein, d.h. beispielsweise aus mehreren Untereinheiten aufgebaut sein, wobei die Untereinheiten die Druckdifferenzen bilden und die Druckdifferenzen in einer weiteren Untereinheit erfasst werden.

Für eine erfindungsgemäße Pelton Turbine ergeben sich die im Folgenden beschriebenen Betriebsverfahren.

In einem ersten erfindungsgemäßen Betriebsverfahren umfasst die Pelton Turbine mehr als eine Düse und jede Düse umfasst wenigstens zwei Drucksensoren, welche so angeordnet sind, so dass die Differenz der mit diesen Sensoren gemessenen Drucke ein Maß für die Durchflussmenge durch die betreffende Düse darstellt. Das Verfahren umfasst die folgenden Schritte:
- Erfassen von Druckmesswerten und Bildung von Druckdifferenzen;
- Steuern der Nadelstellung der Düsen unter Verwendung der gebildeten Druckdifferenzen;

Mit dem beschriebenen erfindungsgemäßen Betriebsverfahren kann sichergestellt werden, dass die Durchflussmenge von allen Düsen gleich groß ist, so dass das Wasser durch die Düsen dem Laufrad möglichst gleichmäßig zugeführt wird.

In einem zweiten erfindungsgemäßen Betriebsverfahren umfasst die Pelton-Turbine wenigstens eine Düse und jede Düse umfasst wenigstens zwei Drucksensoren, welche so angeordnet sind, so dass die Differenz der mit diesen Sensoren gemessenen Drucke ein Maß für die Homogenität der Wasserverteilung in der betreffenden Düse darstellt. Das Verfahren umfasst die folgenden Schritte:
- Erfassen von Druckmesswerten und Bildung von Druckdifferenzen;
- Darstellung der Druckdifferenzen;

Mit dem beschriebenen erfindungsgemäßen Betriebsverfahren kann dem Betreiber der Turbine Information zur Verfügung gestellt werden, anhand derselbe die Strahlqualität und damit die damit Verbundene Effizienz der Turbine beurteilen kann. Gegebenenfalls kann der Betreiber bei einer angezeigten verminderten Strahlqualität weitergehenden Untersuchungen oder Wartungsarbeiten veranlassen.

Zur Unterstützung des Betreibers kann das zweite erfindungsgemäße Betriebsverfahren den folgenden Schritt enthalten:
- Ausgabe einer Warnung, wenn der Betrag wenigstens einer gebildeten Druckdifferenz einen vordefinierten Grenzwert überschreitet;

In diesem Fall kann die Darstellung der Druckdifferenzen auch unterbleiben.

Das erste und das zweite erfindungsgemäße Betriebsverfahren können selbstverständlich auch vorteilhaft miteinander kombiniert werden.

Eine Kalibrierung der Druckdifferenzen kann mit Hilfe einer Modellturbine erfolgen. Aber auch ohne Kalibrierung liefert der relative Vergleich der gebildeten Druckdifferenzen wichtige Erkenntnisse bezüglich der tatsächlich vorliegenden Wasserverteilung. Zur Beurteilung einer degradationsbedingten Qualitätsverschlechterung der Strahlen genügt es ohnehin, wenn nur eine zeitliche Änderung der gebildeten Druckdifferenzen betrachtet wird. Dazu kann einfach auf den Anfangszustand der Turbine zurückreferenziert werden.

Abschließend sei erwähnt, dass die zu den Drucksensoren führenden Messleitungen im Inneren der Stützen verlegt werden können. Außerdem ist eine nachträgliche Ausrüstung von bestehenden Düsen mit den erfindungsgemäßen Drucksensoren ohne weiteres möglich. Dabei können die Messleitungen auch an der Außenseite der Stützen angebracht werden.

### Bezugszeichenliste

- 1: Laufrad
- 2: Düse
- 3: Steuereinrichtung zur Steuerung der Nadeleinstellung der Düsen
- 4: Servomotor-Gehäuse
- 5: Hauptgehäuse
- 6: Stütze
- 7: Drucksensor
- 8: Teilkanal
- 9: Einrichtung zur Erfassung von Druckmesswerten

## Patentansprüche

1. Pelton Turbine umfassend ein Laufrad (1), welches eine Vielzahl von Bechern umfasst, und wenigstens eine Düse (2), welche so angeordnet ist, dass ein aus der wenigstens einen Düse (2) austretende Wasserstrahl auf die Becher des Laufrades (1) treffen kann, und wobei die wenigstens eine Düse (2) zur Einstellung eines Wasserflusses durch die Düse (2) eine bewegbare Nadel umfasst, und wobei die Pelton Turbine eine Steuereinrichtung (3) zur Steuerung einer Stellung der Nadel umfasst, und wobei die wenigstens eine Düse (2) ein Hauptgehäuse (5), ein Servomotor-Gehäuse (4) , welches im Inneren des Hauptgehäuses (5) angeordnet ist, und wenigstens eine Stütze (6), welche das Servomotor-Gehäuse (4) mit dem Hauptgehäuse (5) verbindet, umfasst, **dadurch gekennzeichnet, dass** die Pelton Turbine eine Einrichtung (3, 9) zur Erfassung von Druckmesswerten und die wenigstens eine Düse (2) wenigstens zwei Drucksensoren (7) umfasst, welche jeweils so an einer Stütze (6) der Düse (2) angeordnet sind, dass während des Betriebes der Pelton Turbine Druckmesswerte von der Einrichtung (3, 9) erfasst werden können, und dass eine Differenz der erfassten Druckmesswerte ein Maß für eine Durchflussmenge durch die zugehörige Düse (2) oder ein Maß für eine Homogenität der Wasserverteilung in der zugehörigen Düse (2) darstellen kann.

2. Pelton Turbine nach Anspruch 1, wobei in einer Düse (2) ein erster Drucksensor (7) an einer ersten Stelle einer Stütze (6) und ein zweiter Drucksensor (7) an einer zweiten Stelle einer Stütze (6) angeordnet ist, so dass bezogen auf eine ideale Wasserverteilung in der Düse (2) durch den ersten und den zweiten Drucksensor (7) ungleich große Druckmesswerte erfasst werden können.

3. Pelton Turbine nach Anspruch 1 oder 2, wobei in einer Düse (2) ein erster Drucksensor (7) an einer ersten Stelle einer Stütze (6) und ein zweiter Drucksensor (7) an einer zweiten Stelle einer Stütze (6) angeordnet ist, so dass bezogen auf eine ideale Wasserverteilung in der Düse (2) durch den ersten und den zweiten Drucksensor (7) gleich große Druckmesswerte erfasst werden können.

4. Pelton Turbine nach Anspruch 2, wobei ein erster Drucksensor (7) an einer Stirnseite einer Stütze (6) und ein zweiter Drucksensor (7) an einer Flanke einer Stütze (6) angeordnet ist.

5. Pelton Turbine nach einem der vorangehenden Ansprüche, wobei ein erster Drucksensor (7) an einer Flanke einer Stütze (6) und ein zweiter Drucksensor (7) an einer Flanke einer Stütze (6) angeordnet ist.

6. Verfahren zum Betrieb einer Pelton Turbine gemäß einem der vorangehenden Ansprüche, wobei die Pelton Turbine mehr als eine Düse (2) umfasst, und das Verfahren die folgenden Schritte umfasst:
- Erfassen von Druckmesswerten und Bildung von Druckdifferenzen mittels der Drucksensoren (7) und der Einrichtung (3, 9);
- Steuern der Nadelstellung der Düsen (2) unter Verwendung der gebildeten Druckdifferenzen durch die Steuereinrichtung (3).

7. Verfahren zum Betrieb einer Pelton Turbine gemäß einem der Ansprüche 1 bis 5, wobei das Verfahren die folgenden Schritte umfasst:
- Erfassen von Druckmesswerten und Bildung von Druckdifferenzen mittels der Drucksensoren (7) und der Einrichtung (3, 9);
- Darstellung der gebildeten Druckdifferenzen mittels der Einrichtung (3, 9).

8. Verfahren zum Betrieb einer Pelton Turbine gemäß einem der Ansprüche 1 bis 5, wobei das Verfahren die folgenden Schritte umfasst:
- Erfassen von Druckmesswerten und Bildung von Druckdifferenzen mittels der Drucksensoren (7) und der Einrichtung (3, 9);
- Ausgabe einer Warnung durch die Einrichtung (3, 9), wenn ein Betrag wenigstens einer gebildeten Druckdifferenz einen vordefinierten Grenzwert überschreitet.

9. Verfahren gemäß Anspruch 7, wobei das Verfahren den folgenden Schritt umfasst:
- Ausgabe einer Warnung durch die Einrichtung (3, 9), wenn ein Betrag wenigstens einer gebildeten Druckdifferenz einen vordefinierten Grenzwert überschreitet.

## Claims

1. A Pelton turbine comprising an impeller (1) comprising a plurality of buckets, and at least one nozzle (2) arranged such that a jet of water emerging from the at least one nozzle (2) can impinge on the buckets of the impeller (1), and wherein the at least one nozzle (2) comprises a movable needle for adjusting a flow of water through the nozzle (2), and wherein the Pelton turbine comprises a control device (3) for controlling a position of the needle, and wherein the at least one nozzle (2) comprises a main housing (5), a servomotor housing (4) which is arranged inside the main housing (5), and at least one support (6), which connects the servomotor housing (4) to the main housing (5), **characterised in that** the Pelton turbine comprises a device (3, 9) for detecting measured pressure values and the at least one nozzle (2) comprises at least two pressure sensors (7), which are each arranged on a support (6) of the nozzle (2), that during operation of the Pelton turbine, pressure measurement values can be detected by the device (3, 9), and that a difference in the detected pressure measurement values can represent a measure of a flow rate through the associated nozzle (2) or a measure of a homogeneity of the water distribution in the associated nozzle (2).

2. Pelton turbine according to claim 1, wherein a first pressure sensor (7) is arranged in a nozzle (2) at a first location of a support (6) and a second pressure sensor (7) is arranged at a second location of a support (6), so that, relative to an ideal water distribution in the nozzle (2), pressure measurement values of unequal size can be detected by the first and the second pressure sensor (7).

3. Pelton turbine according to claim 1 or 2, wherein a first pressure sensor (7) is arranged in a nozzle (2) at a first location of a support (6) and a second pressure sensor (7) is arranged at a second location of a support (6), so that, relative to an ideal water distribution in the nozzle (2), pressure measurement values of equal size can be detected by the first and the second pressure sensor (7).

4. Pelton turbine according to claim 2, wherein a first pressure sensor (7) is arranged on an end face of a support (6) and a second pressure sensor (7) is arranged on a flank of a support (6).

5. Pelton turbine according to one of the preceding claims, wherein a first pressure sensor (7) is arranged on a flank of a support (6) and a second pressure sensor (7) is arranged on a flank of a support (6).

6. A method of operating a Pelton turbine according to any one of the preceding claims, wherein the Pelton turbine comprises more than one nozzle (2), and the method comprises the following steps:
- Detecting pressure readings and forming pressure differences by means of the pressure sensors (7) and the device (3, 9);
- controlling the needle position of the nozzles (2) using the pressure differences formed by the control device (3).

7. A method of operating a Pelton turbine according to any one of claims 1 to 5, the method comprising the steps of:
- Detecting measured pressure values and forming pressure differences by means of the pressure sensors (7) and the device (3, 9);
- visualising the formed pressure differences by means of the device (3, 9).

8. A method of operating a Pelton turbine according to any one of claims 1 to 5, the method comprising the steps of:
- Detecting pressure readings and forming pressure differences by means of the pressure sensors (7) and the device (3, 9);
- outputting a warning by the device (3, 9) when an amount of at least one formed pressure difference exceeds a predefined limit value.

9. The method according to claim 7, wherein the method comprises the following step:
- outputting a warning by the device (3, 9) when an amount of at least one formed pressure difference exceeds a predefined limit value.

## Revendications

1. Turbine Pelton comprenant une roue (1) qui comprend une pluralité de godets, et au moins une buse (2) qui est agencée de telle sorte qu'un jet d'eau sortant de ladite au moins une buse (2) peut frapper les godets de la roue (1), et dans laquelle ladite au moins une buse (2) comprend une aiguille mobile pour régler un écoulement d'eau à travers la buse (2), et dans lequel la turbine Pelton comprend un dispositif de commande (3) pour commander une position de l'aiguille, et dans lequel ladite au moins une buse (2) comprend un boîtier principal (5), un boîtier de servomoteur (4) disposé à l'intérieur du boîtier principal (5), et au moins un support (6), qui relie le boîtier de servomoteur (4) au boîtier principal (5), **caractérisé en ce que** la turbine Pelton comprend un dispositif (3, 9) pour détecter des mesures de pression et la au moins une buse (2) comprend au moins deux capteurs de pression (7), chacun étant disposé de cette manière sur un support (6) de la buse (2), **en ce que**, pendant le fonctionnement de la turbine Pelton, des valeurs de mesure de pression peuvent être détectées par le dispositif (3, 9), et **en ce qu'**une différence des valeurs de mesure de pression détectées peut représenter une mesure d'un débit à travers la buse (2) associée ou une mesure d'une homogénéité de la distribution d'eau dans la buse (2) associée.

2. Turbine Pelton selon la revendication 1, dans laquelle un premier capteur de pression (7) est disposé dans une buse (2) à un premier emplacement d'un support (6) et un deuxième capteur de pression (7) est disposé à un deuxième emplacement d'un support (6), de sorte que, par rapport à une répartition idéale de l'eau dans la buse (2), des valeurs de mesure de pression de grandeur différente peuvent être détectées par le premier et le deuxième capteur de pression (7).

3. Turbine Pelton selon la revendication 1 ou 2, dans laquelle un premier capteur de pression (7) est disposé dans une buse (2) à un premier emplacement d'un support (6) et un deuxième capteur de pression (7) est disposé à un deuxième emplacement d'un support (6), de telle sorte que, par rapport à une répartition idéale de l'eau dans la buse (2), des valeurs de mesure de pression de même grandeur peuvent être détectées par le premier et le deuxième capteur de pression (7).

4. Turbine Pelton selon la revendication 2, dans laquelle un premier capteur de pression (7) est disposé sur une face frontale d'un support (6) et un deuxième capteur de pression (7) est disposé sur un flanc d'un support (6).

5. Turbine Pelton selon l'une des revendications précédentes, dans laquelle un premier capteur de pression (7) est disposé sur un flanc d'un support (6) et un deuxième capteur de pression (7) est disposé sur un flanc d'un support (6).

6. Procédé de fonctionnement d'une turbine Pelton selon l'une quelconque des revendications précédentes, dans lequel la turbine Pelton comprend plus d'une buse (2), le procédé comprenant les étapes suivantes :
- Acquisition de mesures de pression et formation de différences de pression au moyen des capteurs de pression (7) et du dispositif (3, 9) ;
- commander la position des aiguilles des buses (2) en utilisant les différences de pression formées par le dispositif de commande (3).

7. Procédé de fonctionnement d'une turbine Pelton selon l'une quelconque des revendications 1 à 5, ledit procédé comprenant les étapes suivantes :
- Acquisition de mesures de pression et formation de différences de pression au moyen des capteurs de pression (7) et du dispositif (3, 9) ;
- Représentation des différences de pression formées au moyen du dispositif (3, 9).

8. Procédé de fonctionnement d'une turbine Pelton selon l'une quelconque des revendications 1 à 5, le procédé comprenant les étapes suivantes :
- Acquisition de mesures de pression et formation de différences de pression au moyen des capteurs de pression (7) et du dispositif (3, 9) ;
- émission d'un avertissement par le dispositif (3, 9) lorsqu'une valeur d'au moins une différence de pression formée dépasse une valeur limite prédéfinie.

9. Procédé selon la revendication 7, ledit procédé comprenant l'étape suivante :
- émission d'un avertissement par le dispositif (3, 9) lorsqu'une valeur d'au moins une différence de pression formée dépasse une valeur limite prédéfinie.
